# EUROPÄISCHE PATENTANMELDUNG

(11) **EP 4 329 267 A1**
(43) Veröffentlichungstag der Anmeldung: **28.02.2024**
(21) Anmeldenummer: 22192203.2
(22) Anmeldetag: 25.08.2022
(51) Int. Cl.: H04L 67/1097, H04L 67/1004, G06F 16/13, G06F 16/901, H04L 9/40, G06F 3/06

(54) **VERFAHREN UND SYSTEMANORDNUNG ZUR DEZENTRALEN DATENVERTEILUNG IN ABHÄNGIGKEIT EINER DATENIDENTIFIKATORBESCHREIBUNG**

(71) Anmelder: DGC Switzerland AG, 8002 Zürich (CH)
(72) Erfinder: Nehls, Matthias, 8002 Zürich (CH)
(74) Vertreter: Reich, Jochen

(57) **Zusammenfassung**

Die vorliegende Erfindung ist auf ein Verfahren und eine Systemanordnung zur dezentralen Datenverteilung in einem Computernetzwerk gerichtet, wobei eine relative Belegungsrate eines Datenidentifikators berücksichtigt wird. Die vorgeschlagene Erfindung ist besonders effizient bezüglich der Auslastung von Systemressourcen und schafft darüber hinaus eine besonders sichere Vorgehensweise dahingehend, dass eine Datenverteilung gemäß einer neuartigen Metrik geschaffen wird. Somit wird ein Auslesen der Datenstruktur erschwert, da die Datenverteilung gemäß einem alternativen Verfahren durchgeführt wird und zudem dynamisch zur Laufzeit geändert werden kann. Die vorliegende Erfindung ist ebenfalls gerichtet auf ein Computerprogrammprodukt mit Befehlen, die bei der Ausführung des Programms durch mindestens einen Computer diesem veranlassen die Schritte des Verfahrens auszuführen bzw. die Systemanordnung zu betreiben. Darüber hinaus wird ein computerlesbares Speichermedium mit den Steuerbefehlen vorgeschlagen.

## Beschreibung

Die vorliegende Erfindung ist auf ein Verfahren und eine Systemanordnung zur dezentralen Datenverteilung in einem Computernetzwerk gerichtet, wobei eine relative Belegungsrate eines Datenidentifikators berücksichtigt wird. Die vorgeschlagene Erfindung ist besonders effizient bezüglich der Auslastung von Systemressourcen und schafft darüber hinaus eine besonders sichere Vorgehensweise dahingehend, dass eine Datenverteilung gemäß einer neuartigen Metrik geschaffen wird. Somit wird ein Auslesen der Datenstruktur erschwert, da die Datenverteilung gemäß einem alternativen Verfahren durchgeführt wird und zudem dynamisch zur Laufzeit geändert werden kann. Die vorliegende Erfindung ist ebenfalls gerichtet auf ein Computerprogrammprodukt mit Befehlen, die bei der Ausführung des Programms durch mindestens einen Computer diesem veranlassen die Schritte des Verfahrens auszuführen bzw. die Systemanordnung zu betreiben. Darüber hinaus wird ein computerlesbares Speichermedium mit den Steuerbefehlen vorgeschlagen.

Aus dem Stand der Technik ist es bekannt Datenformate anhand einer sogenannten Metainformation zu beschreiben. Hierbei können Datenformate in gewisse Teile segmentiert werden, wobei jedem Teil eine Semantik zugeordnet werden kann. Ein Datenformat beschreibt typischerweise eine alphanumerische Zeichenkette, welche durch vorbestimmte Zeichen untergliedert wird.

Aus dem Stand der Technik ist beispielsweise das IPv4 Format bekannt, welches vier Segmente aufweist, welche jeweils durch einen Punkt voneinander getrennt sind. Eine IPv4 Adresse besteht aus drei numerischen Zeichen, welche einen Block formen. Hiervon gibt es vier Blöcke, welche jeweils durch einen Punkt separiert sind. Der Wertebereich eines jeden Datenblocks ist zehn hoch drei, also 1000. Der Wertebereich wird dadurch berechnet, dass jede Stelle des Datenblocks einen Wertebereich hat, beispielsweise zehn bei einer Ziffer von 0-9, und dies wird für die Anzahl der Stellen multipliziert. Bei drei Stellen und Ziffern von 0-9 ist dies also 10 x 10 x 10, also drei hoch zehn bzw. 1000.

Die IPv4 Adressen können auch als Datenidentifikatoren bezeichnet werden und ein entsprechendes Metamodell kann als Datenidentifikatorbeschreibung bezeichnet werden. Hierzu gibt es im Stand der Technik diverse Ausführungen, wie solche Datenidentifikatoren beschrieben werden.

Aus dem Stand der Technik sind reguläre Ausdrücke bekannt, welche Daten beschreiben und somit als Datenidentifikatorbeschreibung bezeichnet werden können. Hierzu werden syntaktische Regeln definiert, wie ein Datenidentifikator auszusehen hat.

In der theoretischen Informatik sind also reguläre Ausdrücke bekannt, also Zeichenfolgen, mit der eine Reihe von Zeichenfolgen mithilfe einiger Syntaxregeln beschrieben wird. Ein Beispiel hierzu ist die Angabe eines Geburtstages, welches als JJJJ.MM.TT erfolgen kann. Wie aus der beispielhaften Datenidentifikatorbeschreibung zu entnehmen ist, ist vierstellig das Jahr anzugeben, zweistellig der Monat und zweistellig der Tag anzugeben. Die einzelnen semantischen Einheiten werden durch Punkte getrennt. Der Benutzer weiß also in welchem Format er den Datenidentifikator angeben soll und er erkennt auch gleich den Wertebereich. Dem Benutzer ist intuitiv klar, dass beispielsweise der Teilbereich MM den Wertebereich zwölf hat. Will der Benutzer nunmehr seinen Geburtstag angeben so kann er beispielsweise 2022.01.01 angeben. Somit hat er einen Datenidentifikator geschaffen, der auf einen bestimmten Tag verweist. Somit ist also der Datenidentifikator der Hinweis auf einen Datensatz bzw. dessen Bezeichnung und die Datenidentifikatorbeschreibung gibt das Format an, in welchem der Datenidentifikator bereitgestellt werden soll. Die Datenidentifikatorbeschreibung kann auch angeben, wie groß der Wertebereich ist. Im vorliegenden Beispiel ist dies für TT gleich 31 und für MM gleich zwölf. Wird der Wertebereich nicht explizit angegeben, so lässt sich dieser einfach berechnen.

Weiterhin ist es aus dem Stand der Technik bekannt, Speichernetzwerke derart auszulasten, dass Systemressourcen ausgewogen abgerufen werden. So werden typischerweise Daten in einem Netzwerk verteilt und derart physisch auf Komponenten abgespeichert, dass zur Laufzeit auf möglichst alle Netzwerkkomponenten gleich verteilt zugegriffen werden kann. Hierbei kann es zu einer Gewichtung kommen und weitere Parameter können berücksichtigt werden, wie beispielsweise eine Bandbreite beziehungsweise eine Verfügbarkeit. Hier gibt es unterschiedliche Metriken, wie die Daten zu unterteilen sind und sodann in Abhängigkeit von ausgemessenen Zugriffsparametern verteilt abgespeichert werden.

Ein Nachteil im Stand der Technik ist es, dass nicht alle Anwendungsszenarien bei einer Verteilung von Datensätzen in einem Computernetzwerk berücksichtigt werden können. Typischerweise werden generische Ansätze geschaffen, wobei ein Bedarf darin besteht eine alternative Möglichkeit zu schaffen, Daten in einem Speichernetzwerk zu verteilen. So berücksichtigt der Stand der Technik beispielsweise nicht eine Belegungsrate der Wertebereiche der Datenidentifikatoren. Diese Möglichkeit erkennt der Stand der Technik überhaupt erst gar nicht.

Ein weiterer Nachteil im Stand der Technik ist es, dass die Datenverteilung bzw. der Mechanismus der Datenverteilung in Computernetzwerken oftmals bekannt ist, was es also einem Angreifer erleichtert eine Datenstruktur vorauszusehen. Angriffe werden oftmals derart ausgeführt, dass der Angreifer bereits Informationen über das Zielsystem gesammelt hat, beziehungsweise versucht dieses vor einem Angriff auszulesen. Werden bekannte Mechanismen eingesetzt, um Daten in einem Speichernetzwerk zu verteilen, so können bereits vorgefertigte Angriffsroutinen durchgeführt werden und in die Datenstruktur schadhafte Befehle eingeführt werden bzw. unberechtigt Daten manipuliert und ausgelesen werden.

Es besteht also ein Bedarf eine alternative Speicherverteilung in einem Speichernetzwerk zu schaffen. Generell besteht der Bedarf darin, weitere Möglichkeiten der Datenverteilung zu schaffen, sodass es einem Angreifer vorab nicht klar ist, welche Datenstruktur er zu erwarten hat. Darüber hinaus besteht ein Bedarf im Stand der Technik eine Möglichkeit zu schaffen, Daten dynamisch zur Laufzeit untergliedert in dem Speichernetzwerk zu verteilen.

Demgemäß ist es eine Aufgabe der vorliegenden Erfindung ein Verfahren und eine Systemanordnung zur Datenverteilung in einem Speichernetzwerk zu schaffen. Hierbei soll es möglich sein, eine Datenstruktur dynamisch zur Laufzeit derart zu verändern, dass ein Angreifer vorab keinerlei Informationen über die tatsächlich vorherrschende Datenstruktur erhält. Darüber hinaus ist es eine Aufgabe ein Verfahren vorzustellen, welches die Speicherverteilung effizient organisiert. Ferner ist es eine Aufgabe der vorliegenden Erfindung eine entsprechend eingerichtete Vorrichtung beziehungsweise Systemanordnung bereitzustellen. Ferner soll ein Computerprogrammprodukt bereitgestellt werden, welches Steuerbefehle vorhält, welche das Verfahren implementieren beziehungsweise die vorgeschlagene Vorrichtung oder Systemanordnung betreiben.

Die Aufgabe wird gelöst durch ein Verfahren mit den Merkmalen gemäß Patentanspruch 1. Weitere vorteilhafte Ausgestaltungen sind in den Unteransprüchen angegeben.

Dementsprechend wird ein Verfahren zur dezentralen Datenverteilung in Abhängigkeit einer Auslastung einer Datenidentifikatorbeschreibung in einem Speichernetzwerk vorgeschlagen, aufweisend ein Unterteilen eines Datenidentifikators eines Datensatzes gemäß einer abgespeicherten Datenidentifikatorbeschreibung zur Erzeugung von Teilzeichenketten des Datenidentifikators, wobei jedem Datensatz ein eindeutiger Datenidentifikator zugewiesen ist; ein iteratives Ausführen des Unterteilens derart, dass für jeden Datenidentifikator jedes Datensatzes mindestens eine Teilzeichenkette berechnet wird; ein Bestimmen der Wertebereiche der Teilzeichenketten und ein Zählen derjenigen Datenidentifikatoren je Teilzeichenketten, welche jeweils diese Teilzeichenketten aufweisen, derart, dass erfasst wird, wie viele Datenidentifikatoren je Teilzeichenketten vorliegen; ein Berechnen einer relativen Belegungsrate der Wertebereiche mittels der Bildung jeweils eines Quotienten eines Betrags der gezählten Datenidentifikatoren je Wertebereich und des jeweiligen Wertebereichs; ein hierarchisches Anordnen der Teilzeichenketten in Abhängigkeit der Belegungsrate als eine Ordnerstruktur und Abspeichern jeweils der Datensätze in demjenigen Ordner der Ordnerstruktur der eine Teilzeichenkette des Datenidentifikators des Datensatzes aufweist, welcher an unterstem Rang in der Ordnerstruktur angeordnet ist; und ein dezentrales Abspeichern der Ordnerstruktur mitsamt der darin enthaltenen Datensätze in dem Speichernetzwerk.

Das vorgeschlagene Verfahren verteilt Daten derart zentral, dass die Datensätze in Ordnern kopiert werden und sodann werden die Ordner auf unterschiedliche Speicherkomponenten verteilt, welche an dem vorgeschlagenen Verfahren teilnehmen. Dezentral heißt also, dass eine verteilte Datenhaltung in einem Computernetzwerk stattfindet. Eine Auslastung einer Datenidentifikatorbeschreibung stellt darauf ab, dass eine relative Belegungsrate derart berücksichtigt wird, dass die Ordnerstruktur in Abhängigkeit der Belegung des Wertebereichs erfolgt. Das heißt also, dass von allen möglichen Belegungen einer Teilzeichenkette eines Datenidentifikators diejenigen tatsächlichen Belegungen gezählt werden und diese sodann ins Verhältnis zur möglichen Obergrenze an Belegungen gesetzt werden. Bei einem Speichernetzwerk handelt es sich um verteilte Datenspeicher, welche netzwerktechnisch miteinander kommunizieren. Das entsprechende Netzwerk kann beispielsweise mindestens teilweise aus dem Internet bestehen.

Ein Unterteilen eines Datenidentifikator eines Datensatzes erfolgt derart, dass die Datenidentifikatorbeschreibung ausgelesen wird und sodann werden einzelne Bruchteile des Datenidentifikators identifiziert und im Folgenden gesondert behandelt. Ein Datenidentifikator kann beispielsweise ein Link sein, oder aber auch eine Bezeichnung eines Datensatzes. So ist es möglich, dass ein Datensatz eine Kostenrechnung beschreibt und der Datenidentifikator ist die Rechnungsnummer. So kann die Datenidentifikatorbeschreibung anzeigen, dass der Datenidentifikator vierstellig aus dem Jahr besteht, zweistellig aus dem Monat und vierstellig aus der Rechnungsnummer. So lassen sich also die einzelnen Teilzeichenketten bilden, die aufzeigen, dass die erste Teilzeichenkette vierstellig ist und aus Ziffern von 0-9 besteht, die zweite Teilzeichenkette ist der zweistellige Monat, wobei die erste Stelle einen Wertebereich null bzw. eins hat und die zweite Stelle einen Wertebereich von 0-2. Somit kann der Wertebereich dieser Teilzeichenkette als 12 identifiziert werden. Die dritte Teilzeichenkette ist die Rechnungsnummer, welche vierstellig ist und somit viermal aus einer Ziffer von 0-9 besteht. Hier lässt sich einfach errechnen, dass der Wertebereich dieser Teilzeichenkette zehn hoch vier ist, also 10.000. Jede Rechnung hat einen eindeutigen Datenidentifikator derart, dass also jede Rechnung, beziehungsweise allgemein gesprochen jeder Datensatz, eindeutig mittels des Datenidentifikators identifizierbar ist.

Beispiele für einen Datenidentifikator sind beispielsweise eine IP-Adresse, generell eine Netzwerkadresse, eine Rechnungsnummer oder ein Dateiname. Die Datenidentifikatorbeschreibung beschreibt hierbei, wie Teilzeichenketten aus dem Datenidentifikator gebildet werden können. Im einfachsten Fall ist dies ein Punkt, der die Teilzeichenketten voneinander abgegrenzt bzw. eine semantische Bedeutung, wie bei einem Datum das Jahr und der Monat.

Damit alle Datenidentifikatoren in Teilzeichenketten zerlegt werden können, erfolgt ein iteratives Ausführen des Unterteilens, derart dass für jeden Datenidentifikator jedes Datensatzes mindestens eine Teilzeichenkette berechnet wird. Am Ende dieses Verfahrensschrittes sind also alle Datenidentifikatoren analysiert und typischerweise in eine gleiche Anzahl von Teilzeichenketten zerlegt. Der Verfahrensschritt kann derart implementiert werden, dass ein Verzeichnis beziehungsweise eine Datenbank ausgelesen wird und somit werden alle Datensätze bezüglich ihrer Datenidentifikatoren behandelt. Liegen beispielsweise die Datenidentifikatoren als ein Netzwerkpfad vor, so kann es möglich sein, dass bei einer IP-Adresse von 192.168.1.2 vier Teilzeichenketten gebildet werden, welche als erste Teilzeichenkette 192, als zweite Teilzeichenkette 168, als dritte Teilzeichenkette 1 und als vierte Teilzeichenkette 2 umfasst. IP-Adressen werden typischerweise durch einen Punkt separiert, derart, dass klar erkennbar ist, dass vier Teilzeichenketten zu bilden sind. Andere Versionen des Internetprotokolls sehen hier mehrere Bereiche vor und dementsprechend werden auch mehrere Teilzeichenketten gebildet.

Liegen die Teilzeichenketten vor, so wird hierzu der Wertebereich bestimmt. Dieser kann entweder aus der Datenidentifikatorbeschreibung ausgelesen werden oder aber auch berechnet werden. Liegen beispielsweise drei Stellen in der Teilzeichenkette vor und werden diese Stellen mit Ziffern aus 0-9 besetzt, so ist der Wertebereich zehn hoch drei, also 1000. Wurde der Wertebereich bestimmt erfolgt ein Zählen derjenigen Datenidentifikatoren je Teilzeichenkette, welche jeweils diese Teilzeichenkette aufweisen. Liegen beispielsweise zwei Rechnungen aus dem Jahr 2022 vor, so ist der Wertebereich der Teilzeichenkette 2022 zehn hoch vier und es werden zwei Rechnungen gezählt, sodass also die Teilzeichenkette mit zwei Instanzen belegt ist. Hierdurch ergibt sich eine relative Belegungsrate von zwei geteilt durch 10.000. Die Anzahl der Datenidentifikatoren je Teil Zeichenkette entspricht typischerweise nicht der Anzahl der Datensätze, da mehrere Teilzeichenketten gebildet werden. Liegt beispielsweise eine Netzwerkadresse mit dem Beginn 192 168 vor, so liegt in einem internen Netzwerk die Teilzeichenkette 192 und die Teilzeichenkette 168 nur einmal vor und typischerweise liegen die Datenidentifikatoren mit dem letzten Segment der IP-Adresse mehrfach vor. Somit hat die Zeichenkette 192 eine Belegungsrate von eins geteilt durch 1000, genau wie die Zeichenkette 168. Die Zeichenkette am Ende der IP-Adresse hat bei fünf IP-Adressen dann eine Belegungsrate von fünf geteilt durch 1000.

Bei einem Berechnen einer relativen Belegungsrate der Wertebereiche mittels der Bildung jeweils eines Quotienten eines Betrags der gezielten Datenidentifikatoren je Wertebereich und des jeweiligen Wertebereichs wird also zuerst gezählt, wie viele tatsächliche Instanzen jeder Teilzeichenkette vorliegen und wie viele Instanzen eigentlich möglich wären. Bei einer Internetprotokolladresse wären beispielsweise je Teilzeichenketten 1000 Adressen möglich, werden jedoch hier nur auf 100 Adressen vergeben, so besteht eine Belegungsrate von eins zu zehn. Gezählt werden also die tatsächlich vorhandenen bzw. vergebenen Datenidentifikatoren, was maximal dem Wertebereich entspricht. Je höher die Belegungsrate der Wertebereich ist, desto höher ist die Auslastung einer Datenidentifikatorbeschreibung. Der Vorgang wird so oft wiederholt, dass für jede Teilzeichenkette die Belegungsrate ermittelt wird.

Ist die Belegungsrate ermittelt, so wird eine Ordnerstruktur erstellt, welche diese Belegungsrate widerspiegelt und die Teilzeichenkette jeweils bezüglich eines Ordners widerspiegelt. So wird für jede Teilzeichenkette ein Ordner geschaffen. Dies kann abstrakt erfolgen oder aber der jeweilige Ordner umfasst in dessen Bezeichnung die Teilzeichenkette. Bevorzugt bildet die jeweilige Teilzeichenkette den Namen des Ordners. Da eine Hierarchie zwischen den Belegungsraten besteht bzw. ein größer - kleiner Verhältnis kann auch eine hierarchische Ordnerstruktur geschaffen werden. Hierbei ist es möglich, denjenigen Ordner der Teilzeichenkette oben anzuordnen die eine hohe Belegungsrate hat oder diesen Ordner bzw. diese Teilzeichenkette weiter unten in der Ordnerstruktur anzulegen. Es folgt also ein numerisches Sortieren der Belegungsraten in der Ordnerstruktur, wobei jedem Ordner eine Teilzeichenkette zugewiesen ist. Die Sortierung erfolgt gemäß der Belegungsrate. Ist die Ordnerstruktur geschaffen, erfolgt ein Abspeichern jeweils der Datensätze in demjenigen Ordner der Ordnerstruktur der eine Teilzeichenkette des Datenidentifikators des Datensatzes aufweist, welcher am untersten Rang in der Ordnerstruktur angeordnet ist. Somit werden also die Datensätze abgespeichert und zwar in demjenigen Ordner, der selbst keine Ordner bzw. Unterordner aufweist. Der letzte Ordner in der Ordnerstruktur dient also zur Ablage der Datensätze.

Sodann erfolgt ein dezentrales Abspeichern der Ordnerstruktur mitsamt der darin enthaltenen Datensätzen in dem Speichernetzwerk. Somit ist es also möglich die Ordner in dem Speichernetzwerk zu verteilen und beispielsweise eine Information abzuspeichern, die angibt, wo Unterordner abgespeichert sind. So kann ein erster Ordner auf einem ersten Netzwerkknoten angeordnet werden und es kann ein Hinweis erstellt werden, wo ein zweiter Ordner auf dem zweiten Netzwerkknoten angeordnet ist. Dadurch wird eine vernetzte Ordnerstruktur geschaffen, die in dem Speichernetzwerk verteilt abgespeichert wird.

Dass die Datensätze in demjenigen Ordner der Ordnerstruktur abgespeichert werden, welcher an untersten Rang in der Ordnerstruktur angeordnet ist widerspricht dem nicht, dass die Datensätze auch an weiterer Stelle bzw. in weiteren Ordnern redundant abgespeichert werden können. So können beispielsweise Zugriffsparameter ausgelesen werden und diejenigen Datensätze die besonders häufig vorkommen können auch redundant weiter oben in der Ordnerstruktur abgespeichert werden. So ist es beispielsweise möglich, dass ein Datensatz, der anhand einer IP-Adresse beschrieben wird, da er sich in einem Netzwerk befindet, in dem Ordner 192 abgespeichert wird und sodann auch in dem untersten Ordner. Darüber hinaus kann auf einem Netzwerkknoten ein Ordner abgespeichert werden oder aber es werden auf mehreren Netzwerkknoten mehrere Ordner jeweils abgespeichert. Ein dezentrales Abspeichern impliziert hierbei nur, dass mindestens zwei Netzwerkknoten in dem Speichernetzwerk vorhanden sein müssen, auf denen die Ordnerstruktur abgespeichert wird. Es ist auch möglich, dass die Anzahl der Ordner der Anzahl der speichernden Netzwerkkomponenten entspricht.

Gemäß einem Aspekt der vorliegenden Erfindung beschreibt die Datenidentifikatorbeschreibung jeweils den Wertebereich. Dies hat den Vorteil, dass der Wertebereich der Teilzeichenketten direkt in der Beschreibung angegeben werden kann, wobei es additiv bzw. alternativ auch möglich ist, den Wertebereich zu berechnen.

Gemäß einem weiteren Aspekt der vorliegenden Erfindung wird je Teilzeichenkette in der Ordnerstruktur ein Ordner angelegt, wobei die Ordnerbezeichnung die Teilzeichenkette umfasst. Dies hat den Vorteil, dass der Name bzw. die Bezeichnung des Ordners die Teilzeichenkette umfasst und optional weitere Information codiert. In einer besonders intuitiven Ausgestaltung ist der Ordnername gleich der Teilzeichenkette.

Gemäß einem weiteren Aspekt der vorliegenden Erfindung erfolgt ein empirisches Auslesen von Zugriffsparametern auf Netzwerkknoten des Speichernetzwerkes und die Ordner werden in Abhängigkeit dieser Zugriffsparameter auf die Netzwerkknoten verteilt. Dies hat den Vorteil, dass die Netzwerkknoten, welche die Ordner abspeichern derart ausgewählt werden können, dass eine Metrik implementiert wird. So können Zugriffsparameter beispielsweise die verfügbare Bandbreite, Latenzzeiten oder eine Verfügbarkeit wiederspiegeln. Somit ist es möglich, die Ordner so anzuordnen, dass diese entweder mit besonders großer Bandbreite oder mit spezieller, niedriger Latenzzeit abgefragt werden können. So ist es beispielsweise bei einem Ordner mit vielen Datensätzen notwendig, dass eine hohe Bandbreite besteht, wobei bei einem Ordner, der lediglich Subordner aufweist, ist es vorteilhaft besonders niedrige Latenzzeiten vorzuweisen. So kann derjenige Netzwerkknoten mit der niedrigsten Latenzzeit die Ordner abspeichern, die weiter oben im Rang der Ordnerstruktur sind, also besonders viele Unterordner aufweisen und diejenigen Netzwerkknoten, die eine hohe Bandbreite aufweisen, können die Ordner abspeichern, die Datensätze abspeichern. Somit werden also Netzwerkknoten mit niedriger Latenzzeit dahingehend priorisiert, dass diese lediglich Unterordner auffassen, also in der Ordnerstruktur weiter oben angeordnet sind und diejenigen Ordner die am unteren Rang sind werden gemäß der Bandbreite priorisiert.

Gemäß einem weiteren Aspekt der vorliegenden Erfindung wird ein Verlauf der Belegungsrate zeitlich extrapoliert und das dezentrale Abspeichern wird proaktiv für zukünftige Belegungsraten ausgeführt. Dies hat den Vorteil, dass erkannt werden kann, wie eine Zeichenkette nach und nach mit Datenidentifikatoren belegt wird und somit kann erkannt werden, wie die Belegungsrate zeitlich ansteigt. Somit können zukünftige Entwicklungen der Belegungsrate erkannt werden und das dezentrale Abspeichern kann vorausschauend derart erfolgen, dass vorab bereits eine Ordnerstruktur geschaffen und abgespeichert wird, die der zukünftigen Belegungsrate entspricht. Somit können Lasten zur Laufzeit verschoben werden, da proaktiv und vorausschauend das Abspeichern erfolgt.

Gemäß einem weiteren Aspekt der vorliegenden Erfindung erfolgt das dezentrale Abspeichern derart, dass sich eine Gleichauslastung der vorhandenen Netzwerkressourcen bezüglich von Zugriffsparametern einstellt. Dies hat den Vorteil, dass das Verteilen der Datensätze bzw. Ordnerstrukturen im Netz die vorhandenen Netzwerkressourcen berücksichtigt und die einzelnen Komponenten in dem Netzwerk werden derart belegt, dass zur Laufzeit alle Zugriffsparameter in etwa gleich sind. Beispielsweise kann eine Gleichauslastung bezüglich der angeforderten Bandbreite über alle Netzwerkknoten erfolgen.

Gemäß einem weiteren Aspekt der vorliegenden Erfindung beschreibt die Datenidentifikatorbeschreibung Teilzeichenketten des Datenformats generisch. Dies hat den Vorteil, dass ein regulärer Ausdruck geschaffen werden kann oder aber ein Metadateiformat, welches die Teilzeichenketten identifizierbar macht. Somit kann die Identifikatorbeschreibung derart zerlegt bzw. segmentiert werden, dass Teilzeichenketten entstehen.

Gemäß einem weiteren Aspekt der vorliegenden Erfindung beschreiben Zugriffsparameter eine Latenzzeit, eine Auswahl von tatsächlichen Datenanfragen, eine Anzahl von geschätzten Datenanfragen, eine Geoinformation, eine Bandbreite, eine Verfügbarkeit und/ oder einen Netzwerkparameter. Dies hat den Vorteil, dass das Abspeichern in Abhängigkeit einer Vielzahl von Zugriffsparametern erfolgen kann, beziehungsweise dass die Auswahl der Netzwerkknoten derart erfolgen kann, dass bestimmte Zugriffsparameter gemäß einer Vorgabe stets eingehalten werden.

Beispielsweise können bezüglich der Zugriffsparameter Schwellwerte angegeben werden, die nicht überschritten werden dürfen. Erfolgt ein solches Überschreiten, so wird ein Teil der Ordnerstruktur und/ oder der Datensätze auf einen anderen Netzwerkknoten ausgelagert, sodass wieder die Sollwerte eingehalten werden.

Gemäß einem weiteren Aspekt der vorliegenden Erfindung werden Teilzeichenketten mit höherer Belegungsrate stets weiter unten in der Datenstruktur abgespeichert, derart, dass die Teilzeichenkette mit höchster Belegungsrate am untersten in der Ordnerstruktur abgespeichert wird. Dies hat den Vorteil, dass der Ordner mit der größten Belegungsrate, also derjenige Ordner, der am weitesten unten in der Ordnerstruktur ist, die Datensätze abspeichert. Generell bezieht sich bezüglich der Ordnerstruktur unten und oben auf die Position innerhalb der hierarchischen Baumstruktur. Oben bedeutet hierbei, dass mehrere Unterordner vorhanden sind, wobei unten bedeutet, dass kein Unterordner mehr vorhanden ist.

Gemäß einem weiteren Aspekt der vorliegenden Erfindung erfolgt das hierarchische Abspeichern der Teilzeichenketten in Abhängigkeit der Belegungsrate derart, dass die relative Belegungsrate die Position der Teilzeichenkette in der Ordnerstruktur widerspiegelt. Dies hat den Vorteil, dass die Belegungsrate indirekt die Position eines Ordners in der Ordnerstruktur widerspiegelt. So kann auch die Ordnerstruktur in Abhängigkeit der sich ändernden Belegungsrate umsortiert werden. Generell gilt, dass Ordner auch auf der gleichen Ebene sein können. Dies ist beispielsweise dann der Fall, wenn die gleiche Belegungsrate vorherrscht. Im untersten Unterordner kann es beispielsweise auch vorkommen, dass mehrere Ordner Datensätze abspeichern. Liegt also die gleiche Belegungsrate vor, so werden Ordner auf der gleichen Ebene abgespeichert. Somit kommt es zu einem redundanten Anlegen von Unterordnern und eben auch einer redundante Datenhaltung. Werden nunmehr diese Ordner im Netzwerk verteilt, so können also die Datensätze der Unterordner auf unterschiedlichen Netzwerkknoten verteilt werden.

Gemäß einem weiteren Aspekt der vorliegenden Erfindung umfasst das dezentrale Abspeichern der Ordnerstruktur mitsamt Datensätzen ein Migrieren, ein Abspeichern, ein redundantes Abspeichern, ein Löschen abgespeichert Datensätze, ein Verteilen von Datensätzen auf Netzwerkkomponenten und/ oder ein Verschieben von Datensätzen. Dies hat den Vorteil, dass alle möglichen Abspeichervorgänge unterstützt werden. So ist es erfindungsgemäß unter anderem möglich, dass Datensätze bzw. Ordner redundant abgespeichert werden und somit kann die Netzauslastung bzw. die Zugriffsparameter der Netzwerkknoten balanciert werden. Werden Daten verschoben, so erfolgt ein Kopieren und dann ein Löschen. Ein Kopieren kann jedoch auch ohne Löschen erfolgen, sodass redundante Ordner bzw. Datensätze entstehen.

Gemäß einem weiteren Aspekt der vorliegenden Erfindung stellt der Verfahrensschritt des Bestimmens der Wertebereiche und des Zählens der Datenidentifikatoren einen Hinweis auf eine Auslastung des Adressraums der jeweiligen Zeichenkette bereit. Dies hat den Vorteil, dass die Teilzeichenketten als Adressräume verstanden werden können und somit wird mit der Belegungsrate gemessen, wie viele Adressen in dem insgesamt vorhandenen Adressraum belegt wurden.

Die Aufgabe wird auch gelöst durch eine Systemanordnung zur dezentralen Datenverteilung in Abhängigkeit einer Auslastung einer Datenidentifikatorbeschreibung in einem Speichernetzwerk, aufweisend eine Segmentierungseinheit eingerichtet zum Unterteilen eines Datenidentifikators eines Datensatzes gemäß einer abgespeicherten Datenidentifikatorbeschreibung zur Erzeugung von Teilzeichenketten des Datenidentifikators, wobei jedem Datensatz ein eindeutiger Datenidentifikator zugewiesen ist; eine Schleifeneinheit eingerichtet zum iterativen Ausführen des Unterteilens, derart, dass für jeden Datenidentifikator jedes Datensatzes mindestens eine Teilzeichenkette berechnet wird; eine Recheneinheit eingerichtet zum Bestimmen der Wertebereiche der Teilzeichenketten und ein Zählen derjenigen Datenidentifikatoren je Teilzeichenketten, welche jeweils diese Teilzeichenketten aufweisen, derart, dass erfasst wird, wie viele Datenidentifikatoren je Teilzeichenketten vorliegen; eine Belegungseinheit eingerichtet zum Berechnen einer relativen Belegungsrate der Wertebereiche mittels der Bildung jeweils eines Quotienten eines Betrags der gezählten Datenidentifikatoren je Wertebereich und des jeweiligen Wertebereichs; einer Strukturierungseinheit eingerichtet zum hierarchischem Anordnen der Teilzeichenketten in Abhängigkeit der Belegungsrate als eine Ordnerstruktur und Abspeichern jeweils der Datensätze in demjenigen Ordner der Ordnerstruktur der eine Teilzeichenkette des Datenidentifikators des Datensatzes aufweist, welcher an unterstem Rang in der Ordnerstruktur angeordnet ist; und einer Verteilungseinheit eingerichtet zum dezentralen Abspeichern der Ordnerstruktur mitsamt der darin enthaltenen Datensätze in dem Speichernetzwerk.

Die Aufgabe wird auch gelöst durch ein Computerprogrammprodukt mit Steuerbefehlen, welche das vorgeschlagene Verfahren implementieren beziehungsweise die vorgeschlagene Vorrichtung betreiben.

Erfindungsgemäß ist es besonders vorteilhaft, dass das Verfahren zum Betreiben der vorgeschlagenen Vorrichtungen und Einheiten verwendet werden kann. Ferner eignen sich die vorgeschlagenen Vorrichtungen und Einrichtungen zur Ausführung des erfindungsgemäßen Verfahrens. Somit implementiert jeweils die Vorrichtung strukturelle Merkmale, welche geeignet sind, das entsprechende Verfahren auszuführen. Die strukturellen Merkmale können jedoch auch als Verfahrensschritte ausgestaltet werden. Auch hält das vorgeschlagene Verfahren Schritte zu Umsetzung der Funktion der strukturellen Merkmale bereit. Darüber hinaus können physische Komponenten gleicherweise auch virtuell bzw. virtualisiert bereitgestellt werden.

Weitere Vorteile, Merkmale und Einzelheiten der Erfindung ergeben sich aus der nachfolgenden Beschreibung, in der unter Bezugnahme auf die Zeichnungen Aspekte der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren. In den Figuren zeigen:
- Figur 1:: ein schematisches Ablaufdiagramm des vorgeschlagenen Verfahrens gemäß einem Aspekt der vorliegenden Erfindung;
- Figur 2:: ein Zerlegen eines Datenidentifikators gemäß einer Datenidentifikatorbeschreibung zur Schaffung von Teilzeichenketten und das Anordnen entsprechender Ordner in einer Ordnerstruktur gemäß einem Aspekt der vorliegenden Erfindung; und
- Figur 3:: ein dezentrales Abspeichern der Ordnerstruktur mitsamt der darin enthaltenen Datensätzen in einem Speichernetzwerk.

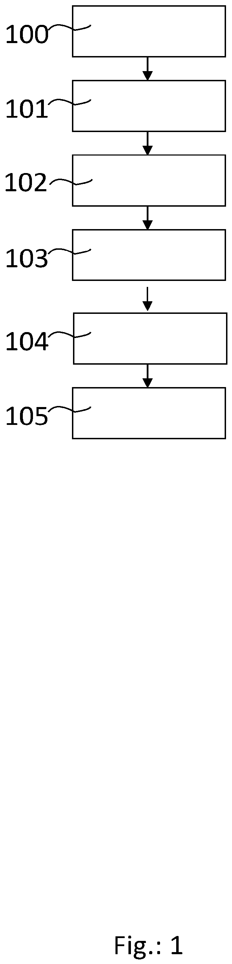

Figur 1 zeigt ein schematisches Ablaufdiagramm mit einem Verfahren zur dezentralen Datenverteilung in Abhängigkeit einer Auslastung einer Datenidentifikatorbeschreibung in einem Speichernetzwerk, aufweisend ein Unterteilen 100 eines Datenidentifikators eines Datensatzes gemäß einer abgespeicherten Datenidentifikatorbeschreibung zur Erzeugung von Teilzeichenketten des Datenidentifikators, wobei jedem Datensatz ein eindeutiger Datenidentifikator zugewiesen ist; ein iteratives Ausführen 101 des Unterteilens 100, derart, dass für jeden Datenidentifikator jedes Datensatzes mindestens eine Teilzeichenkette berechnet wird; ein Bestimmen 102 der Wertebereiche der Teilzeichenketten und ein Zählen derjenigen Datenidentifikatoren je Teilzeichenketten, welche jeweils diese Teilzeichenketten aufweisen, derart, dass erfasst wird, wie viele Datenidentifikatoren je Teilzeichenketten vorliegen; ein Berechnen 103 einer relativen Belegungsrate der Wertebereiche mittels der Bildung jeweils eines Quotienten eines Betrags der gezählten Datenidentifikatoren je Wertebereich und des jeweiligen Wertebereichs; ein hierarchisches Anordnen 104 der Teilzeichenketten in Abhängigkeit der Belegungsrate als eine Ordnerstruktur und Abspeichern jeweils der Datensätze in demjenigen Ordner der Ordnerstruktur der eine Teilzeichenkette des Datenidentifikators des Datensatzes aufweist, welcher an unterstem Rang in der Ordnerstruktur angeordnet ist; und dezentrales Abspeichern 105 der Ordnerstruktur mitsamt der darin enthaltenen Datensätze in dem Speichernetzwerk.

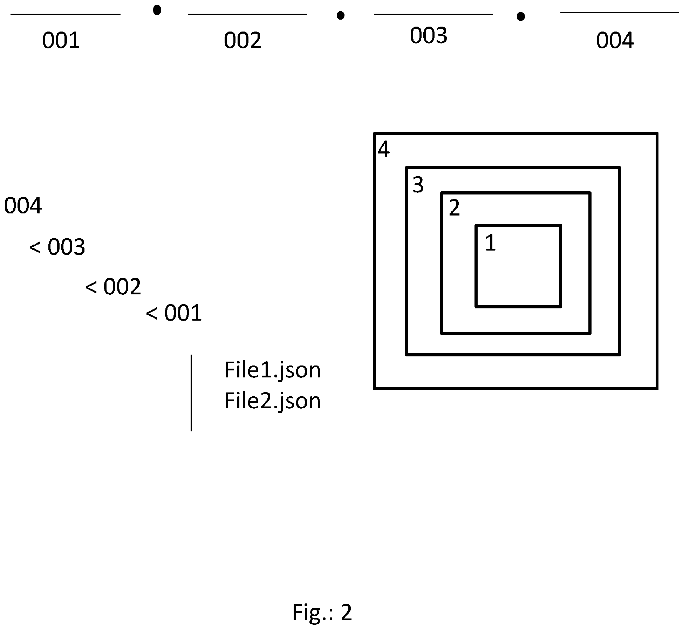

Figur 2 zeigt oben eine Datenidentifikatorbeschreibung, welche angibt, dass ein Datenidentifikator aus vier Teilzeichenketten besteht, die jeweils mit Punkten separiert werden. Darüber hinaus kann angegeben werden, dass ein Datenidentifikator aus jeweils drei Ziffern besteht, mit Ziffern zwischen 0-9. Hieraus errechnet sich ein Wertebereich von zehn hoch drei, also 1000. Es erfolgt also ein Unterteilen des Datenidentifikators derart, dass Teilzeichenketten erzeugt werden, welche im vorliegenden Beispiel 001, 002, 003 und 004 sind. Der Datenidentifikator wird also eingelesen und anhand der Datenidentifikatorbeschreibung wird erkannt, dass aufgrund der drei Punkte vier Teilsequenzen vorliegen.

Generell ist es auch möglich, dass Datenidentifikatoren in großer Anzahl vorliegen. Sodann werden also nicht nur vier Teilzeichenketten geschaffen, sondern diverse Teilzeichenketten. So kann im vorliegenden Beispiel ein Datenidentifikator vorliegen, der gleichlautend gemäß dem Beispiel gemäß Figur 2 ist, aber an letzter Stelle 005 aufweist. Sodann werden die ersten drei Teilzeichenketten bezüglich ihres Auftretens gezählt und man kommt zu dem Ergebnis, dass die ersten drei Teilzeichenketten jeweils zweimal vorliegen. Die Teil Zeichenkette 004 liegt nur einmal vor und die Teilzeichenkette 005 liegt auch nur einmal vor. Somit haben die ersten drei Teilzeichenketten jeweils eine Belegungsrate von zwei geteilt durch 1000 und die letzte Teil Zeichenkette 004 hat eine Belegungsrate von eins geteilt durch 1000 und die Teilzeichenkette 005 hat eine Belegungsrate von eins geteilt durch 1000.

Je nachdem ob man höhere Belegungsraten oben anordnet oder unten wird nunmehr die Baumstruktur erstellt, wie dies vorliegend links unten gezeigt ist. Im vorliegenden Beispiel wird angenommen, dass die Teilzeichenkette 004 die niedrigste Belegungsrate hat und daher wird diese in der Baumstruktur ganz oben angeordnet. Dies wird für alle Teilzeichenketten durchgeführt und es wird eine Ordnerstruktur geschaffen, wie sie vorliegend unten in der Figur 2 geschaffen ist.

Derjenige Ordner, der am untersten Rang in der Ordnerstruktur angeordnet ist, speichert die Datensätze. Vorliegend sind dies mehrere Dateien. Die Dateien werden also ganz unten gespeichert, was allerdings nicht ausschließt, dass diese redundant abgespeichert werden, beispielsweise wenn sich ein Unterordner auf der gleichen Ebene befindet wie der Ordner 001.

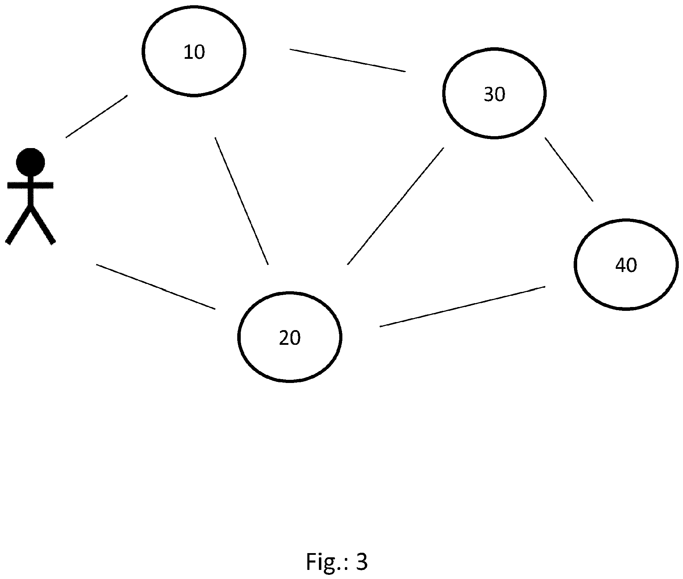

Figur 3 zeigt ein dezentrales Abspeichern der Ordnerstruktur in dem Speichernetzwerk. In Figur 3 ist auf der linken Seite ein Akteur dargestellt, der auf ein Computernetzwerk mit den Netzwerkknoten 10, 20, 30 und 40 zugreift. Erfindungsgemäß ist es beispielsweise möglich, dass in der Ordnerstruktur ganz unten mehrere Ordner sind, da diese den gleichen Rang bzw. die gleiche Belegungsrate aufweisen. Somit verfügen mehrere Ordner über Datensätze und diese können beispielsweise auf den Netzwerkknoten 10 und 20 gespeichert werden. Weitere Ordner können verteilt werden, derart, dass im vorliegenden Beispiel zwei oder drei Ordner auf dem Netzwerkknoten 30 liegen und weitere fünf Ordner auf dem Netzwerkknoten 40. Darüber hinaus können Datensätze auch redundant abgespeichert werden, sodass die Datensätze sowohl auf Netzwerkknoten 20 als auch 30 verteilt sind. Darüber hinaus ist es möglich, dass Zugriffsparameter ausgemessen werden und so kann beispielsweise erkannt werden, dass die Netzwerkknoten 10 und 20 netzwerktechnisch am nähesten an dem Akteur angebunden sind und somit können die Datensätze auf diesem Netzwerkknoten gespeichert werden. Die übrige Ordnerstruktur kann sodann auch auf Netzwerkknoten 30 gespeichert werden. Somit erfolgt ein verteiltes Abspeichern der Ordner, Ordnerstruktur und Datensätze in Abhängigkeit von ausgemessenen Zugriffsparametern.

## Patentansprüche

1. Verfahren zur dezentralen Datenverteilung in Abhängigkeit einer Auslastung einer Datenidentifikatorbeschreibung in einem Speichernetzwerk, aufweisend:
- ein Unterteilen (100) eines Datenidentifikators eines Datensatzes gemäß einer abgespeicherten Datenidentifikatorbeschreibung zur Erzeugung von Teilzeichenketten des Datenidentifikators, wobei jedem Datensatz ein eindeutiger Datenidentifikator zugewiesen ist;
- ein iteratives Ausführen (101) des Unterteilens (100), derart, dass für jeden Datenidentifikator jedes Datensatzes mindestens eine Teilzeichenkette berechnet wird;
- ein Bestimmen (102) der Wertebereiche der Teilzeichenketten und ein Zählen derjenigen Datenidentifikatoren je Teilzeichenketten, welche jeweils diese Teilzeichenketten aufweisen, derart, dass erfasst wird, wie viele Datenidentifikatoren je Teilzeichenketten vorliegen;
- ein Berechnen (103) einer relativen Belegungsrate der Wertebereiche mittels der Bildung jeweils eines Quotienten eines Betrags der gezählten Datenidentifikatoren je Wertebereich und des jeweiligen Wertebereichs;
- ein hierarchisches Anordnen (104) der Teilzeichenketten in Abhängigkeit der Belegungsrate als eine Ordnerstruktur und Abspeichern jeweils der Datensätze in demjenigen Ordner der Ordnerstruktur der eine Teilzeichenkette des Datenidentifikators des Datensatzes aufweist, welcher an unterstem Rang in der Ordnerstruktur angeordnet ist; und
- dezentrales Abspeichern (105) der Ordnerstruktur mitsamt der darin enthaltenen Datensätze in dem Speichernetzwerk.

2. Verfahren nach Anspruch 1, **dadurch gekennzeichnet, dass** die Datenidentifikatorbeschreibung jeweils den Wertebereich beschreibt.

3. Verfahren nach Anspruch 1 oder 2, **dadurch gekennzeichnet, dass** je Teilzeichenkette in der Ordnerstruktur ein Ordner angelegt wird, wobei die Ordnerbezeichnung die Teilzeichenkette umfasst.

4. Verfahren nach einem der vorhergehenden Ansprüche, **dadurch gekennzeichnet, dass** ein empirisches Auslesen von Zugriffsparametern auf Netzwerkknoten des Speichernetzwerkes erfolgt und die Ordner in Abhängigkeit dieser Zugriffsparameter auf die Netzwerkknoten verteilt werden.

5. Verfahren nach einem der vorhergehenden Ansprüche, **dadurch gekennzeichnet, dass** ein Verlauf der Belegungsrate zeitlich extrapoliert wird und das dezentrale Abspeichern proaktiv für zukünftige Belegungsraten ausgeführt wird.

6. Verfahren nach einem der vorhergehenden Ansprüche, **dadurch gekennzeichnet, dass** das dezentrale Abspeichern (105) derart erfolgt, dass sich eine Gleichauslastung der vorhandenen Netzwerkressourcen bezüglich von Zugriffsparametern einstellt.

7. Verfahren nach einem der vorhergehenden Ansprüche, **dadurch gekennzeichnet, dass** die Datenidentifikatorbeschreibung Teilzeichenketten des Datenformats generisch beschreibt.

8. Verfahren nach einem der vorhergehenden Ansprüche, **dadurch gekennzeichnet, dass** Zugriffsparameter eine Latenzzeit, eine Anzahl von tatsächlichen Datenanfragen, eine Anzahl von geschätzten Datenanfragen, eine Geoinformation, eine Bandbreite, eine Verfügbarkeit und/ oder einen Netzwerkparameter beschreiben.

9. Verfahren nach einem der vorhergehenden Ansprüche, **dadurch gekennzeichnet, dass** die Teilzeichenketten mit höherer Belegungsrate stets weiter unten in der Datenstruktur abgespeichert werden, derart, dass die Teilzeichenkette mit höchster Belegungsrate um untersten in der Ordnerstruktur abgespeichert werden.

10. Verfahren nach einem der vorhergehenden Ansprüche, **dadurch gekennzeichnet, dass** das hierarchische Abspeichern der Teilzeichenketten in Abhängigkeit der Belegungsrate derart erfolgt, dass die relative Belegungsrate die Position der Teilzeichenkette in der Ordnerstruktur wiederspiegelt.

11. Verfahren nach einem der vorhergehenden Ansprüche, **dadurch gekennzeichnet, dass** das dezentrale Abspeichern (105) der Ordnerstruktur mitsamt Datensätzen ein Migrieren, ein Abspeichern, ein redundantes Abspeichern, ein Löschen abgespeicherter Datensätze, ein Verteilen von Datensätzen auf Netzwerkkomponenten und/ oder ein Verschieben von Datensätzen umfasst.

12. Verfahren nach einem der vorhergehenden Ansprüche, **dadurch gekennzeichnet, dass** der Verfahrensschritt des Bestimmens der Wertebereiche und des Zählens der Datenidentifikatoren einen Hinweis auf eine Auslastung des Adressraums der jeweiligen Teilzeichenkette bereitstellt.

13. Systemanordnung zur dezentralen Datenverteilung in Abhängigkeit einer Auslastung einer Datenidentifikatorbeschreibung in einem Speichernetzwerk, aufweisend:
- eine Segmentierungseinheit eingerichtet zum Unterteilen (100) eines Datenidentifikators eines Datensatzes gemäß einer abgespeicherten Datenidentifikatorbeschreibung zur Erzeugung von Teilzeichenketten des Datenidentifikators, wobei jedem Datensatz ein eindeutiger Datenidentifikator zugewiesen ist;
- eine Schleifeneinheit eingerichtet zum iterativen Ausführen (101) des Unterteilens (100), derart, dass für jeden Datenidentifikator jedes Datensatzes mindestens eine Teilzeichenkette berechnet wird;
- eine Recheneinheit eingerichtet zum Bestimmen (102) der Wertebereiche der Teilzeichenketten und ein Zählen derjenigen Datenidentifikatoren je Teilzeichenketten, welche jeweils diese Teilzeichenketten aufweisen, derart, dass erfasst wird, wie viele Datenidentifikatoren je Teilzeichenketten vorliegen;
- eine Belegungseinheit eingerichtet zum Berechnen (103) einer relativen Belegungsrate der Wertebereiche mittels der Bildung jeweils eines Quotienten eines Betrags der gezählten Datenidentifikatoren je Wertebereich und des jeweiligen Wertebereichs;
- einer Strukturierungseinheit eingerichtet zum hierarchischem Anordnen (104) der Teilzeichenketten in Abhängigkeit der Belegungsrate als eine Ordnerstruktur und Abspeichern jeweils der Datensätze in demjenigen Ordner der Ordnerstruktur der eine Teilzeichenkette des Datenidentifikators des Datensatzes aufweist, welcher an unterstem Rang in der Ordnerstruktur angeordnet ist; und
- einer Verteilungseinheit eingerichtet zum dezentralen Abspeichern (105) der Ordnerstruktur mitsamt der darin enthaltenen Datensätze in dem Speichernetzwerk.

14. Computerprogrammprodukt, umfassend Befehle, die bei der Ausführung des Programms durch mindestens einen Computer diesen veranlassen, die Schritte des Verfahrens nach einem der Ansprüche 1 bis 12 auszuführen.

15. Computerlesbares Speichermedium, umfassend Befehle, die bei der Ausführung durch mindestens einen Computer diesen veranlassen, die Schritte des Verfahrens nach einem der Ansprüche 1 bis 12 auszuführen.
